# EUROPEAN PATENT APPLICATION

(11) **EP 3 955 674 A1**
(43) Date of publication of application: **16.02.2022**
(21) Application number: 20788493.3
(22) Date of filing: 08.04.2020
(51) Int. Cl.: H04W 72/04

(54) **USER TERMINAL AND WIRELESS COMMUNICATION METHOD**

(30) Priority: 09.04.2019 JP 2019084681
(71) Applicant: NTT DOCOMO, INC., Chiyoda-Ku Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2020/015796
(87) International publication number: WO 2020/209281

(57) **Abstract**

To appropriately configure a spatial relation for a UL signal/channel. A user terminal according to an aspect of the present disclosure includes: a receiving section that receives a medium access control (MAC) control element for activating spatial relation information (SRI) related to a sounding reference signal (SRS) resource set; and a control section that applies the SRI activated by the MAC control element to given uplink transmission.

## Description

### Technical Field

The present disclosure relates to user terminal and a radio communication method in a next-generation mobile communication system.

### Background Art

In a universal mobile telecommunications system (UMTS) network, specifications of long term evolution (LTE) have been drafted for the purpose of further increasing a data rate, providing low latency, and the like (see Non Patent Literature 1). Further, the specifications of LTE-Advanced (third generation partnership project (3GPP) Release. (Rel.) 10 to 14) have been drafted for the purpose of further increasing capacity and advancement of LTE (3GPP Rel. 8 and 9).

Successor systems to LTE (e.g., also referred to as 5th generation mobile communication system (5G), 5G+ (plus), new radio (NR), and 3GPP Rel. 15 or later) are considered.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In NR, a user terminal (user equipment (UE)) controls transmission processing (for example, at least one of transmission, mapping, precoding, modulation, and coding) of at least one of an uplink signal and a channel (also referred to as a signal/channel) on the basis of a given spatial relation.

In Rel-15 NR, configuration information of a sounding reference signal (SRS) resource configured in the UE includes spatial relation information (may be referred to as SRI). That is, an SRS resource and a spatial relation are configured in one-to-one association.

On the other hand, in the NR specification, it has been considered to increase the number of UL beams (SRI) that can be used by the UE (for example, increase the number to 64). However, based on the existing Rel-15 NR specification, in order to increase the number of pieces of SRI that can be used by the UE, it is necessary to increase the number of SRS resources to be configured accordingly, and there is a problem that communication overheads for configuration increase.

Therefore, an object of the present disclosure is to provide a user terminal and a radio communication method capable of appropriately configuring a spatial relation for a UL signal/channel.

### Solution to Problem

A user terminal according to an aspect of the present disclosure includes: a receiving section that receives a medium access control (MAC) control element for activating spatial relation information (SRI) related to a sounding reference signal (SRS) resource set; and a control section that applies the SRI activated by the MAC control element to given uplink transmission.

### Advantageous Effects of Invention

According to one aspect of the present disclosure, a spatial relation for a UL signal/channel can be configured appropriately.

### Brief Description of Drawings

Fig. 1 is a diagram illustrating an example of configuration of SRS resources and SRI in the existing Rel-15 NR.
Fig. 2 is a diagram illustrating an example of configuration of SRS resources and SRI according to a first embodiment.
Figs. 3A-3D are diagrams illustrating an example of an SRI activation/deactivation MAC CE according to the first embodiment.
Fig. 4 is a diagram illustrating an example of configuration of SRS resources and SRI according to a fourth embodiment.
Fig. 5 is a diagram illustrating an example of an SRI activation/deactivation MAC CE according to the fourth embodiment.
Fig. 6 is a diagram illustrating an example of a schematic configuration of a radio communication system according to an embodiment.
Fig. 7 is a diagram illustrating an example of a configuration of a base station according to an embodiment.
Fig. 8 is a diagram illustrating an example of a configuration of a user terminal according to an embodiment.
Fig. 9 is a diagram illustrating an example of a hardware configuration of a base station and a user terminal according to an embodiment.

### Description of Embodiments

### (SRS)

In the NR, a sounding reference signal (SRS) has a wide range of usages. The SRS of the NR is used not only for uplink (UL) CSI measurement also used in existing LTE (LTE Rel. 8 to 14) but also for downlink (DL) CSI measurement, beam management and the like.

In the UE, one or a plurality of SRS resources may be configured. The SRS resource may be specified by an SRS resource index (SRI).

Each SRS resource may include one or a plurality of SRS ports (may correspond to one or a plurality of SRS ports). For example, the number of ports of each SRS may be one, two, four and the like.

In the UE, one or a plurality of SRS resource sets may be configured. One SRS resource set may be associated with a given number of SRS resources. The UE may commonly use a higher layer parameter for the SRS resources included in one SRS resource set. Note that, in the present disclosure, the resource set may be replaced with a set, a resource group, a group and the like.

Information regarding the SRS resources or resource set may be configured in the UE by using higher layer signaling, physical layer signaling, or a combination thereof.

Note that in the present disclosure, the higher layer signaling may be, for example, any one of radio resource control (RRC) signaling, medium access control (MAC) signaling, broadcast information, or a combination thereof.

The MAC signaling may use, for example, a MAC control element (MAC CE), a MAC protocol data unit (PDU), and the like. The broadcast information may be, for example, a master information block (MIB), a system information block (SIB), remaining minimum system information (RMSI), other system information (OSI), and the like.

The physical layer signaling may be, for example, Downlink Control Information (DCI).

SRS configuration information (e.g., the RRC information element "SRS-Config") may include SRS resource set configuration information, SRS resource configuration information, or the like.

The SRS resource set configuration information (e.g., the RRC parameter "SRS-ResourceSet") may include information on an SRS resource set identifier (ID) (SRS-ResourceSetId), a list of SRS resource IDs (SRS-ResourceId) used in the resource set, an SRS resource type, and SRS usage.

Herein, the SRS resource type may indicate any one of a periodic SRS (P-SRS), a semi-persistent SRS (SP-SRS), and an aperiodic CSI (A-SRS). Note that the UE may transmit the P-SRS and SP-SRS periodically (or periodically after activation). The UE may transmit the A-SRS based on the SRS request of the DCI.

Further, the SRS usage (the RRC parameter "usage" or the Layer-1 (L1) parameter "SRS-SetUse") may be, for example, beam management, codebook, non-codebook, antenna switching, or the like. An SRS used for codebook or non-codebook may be used to determine a precoder for codebook-based or non-codebook-based physical uplink shared channel (PUSCH) transmission based on an SRI.

For an SRS used for beam management, it may be assumed that only one SRS resource per SRS resource set can be transmitted at a given time instant. When different SRS resources belong to different SRS resource sets, these SRS resources may be transmitted at the same time.

The SRS resource configuration information (e.g., the RRC parameter "SRS-Resource") may include an SRS resource ID (SRS-ResourceId), the number of SRS ports, the SRS port numbers, a transmission comb, SRS resource mapping (such as a time and/or frequency resource position, a resource offset, a resource period, the number of repetitions, the number of SRS symbols, an SRS bandwidth, etc.), hopping-related information, an SRS resource type, a sequence ID, spatial relation information, etc.

The UE may transmit an SRS in as many adjacent symbols of the last six symbols in one slot as the number of SRS symbols. The number of SRS symbols may be one, two, or four, for example.

The UE may switch bandwidth parts (BWPs) to transmit an SRS or may switch antennas slot by slot. Further, the UE may apply at least one of intra-slot hopping and inter-slot hopping to SRS transmission.

### (Spatial relation)

In the NR, the UE controls transmission processing (for example, at least one of transmission, mapping, precoding, modulation, and coding) of at least one of an uplink signal and a channel (also referred to as a signal/channel) on the basis of a given spatial relation.

A spatial relation applied to a given signal/channel may be specified by spatial relation information (SRI) notified (configured) using higher layer signaling. The SRS spatial relation information (for example, "spatialRelationInfo" of RRC parameter) may indicate spatial relation information between a given reference signal (RS) and SRS.

The given reference signal may be, for example, at least one of a synchronization signal block (SSB), a channel state information reference signal (CSI-RS), and a sounding reference signal (SRS). Here, the SSB may be referred to as a synchronization signal/physical broadcast channel (SS/PBCH) block.

The SRS spatial relation information may include at least one of an SSB index, a CSI-RS resource ID, and an SRS resource ID as an index of the given reference signal.

Note that, in the present disclosure, an SSB index, an SSB resource ID, and an SSB resource indicator (SSBRI) may be replaced with each other. Further, a CSI-RS index, a CSI-RS resource ID, and a CSI-RS resource indicator (CRI) may be replaced with each other. Further, an SRS index, an SRS resource ID and an SRI may be replaced with each other.

The configured SRI may include at least one of an SSB index, a CSI-RS resource ID, and an SRS resource ID, as the index of the given RS. Further, the SRI may include a serving cell index, a bandwidth part (BWP) ID, and the like corresponding to the given RS.

In the present disclosure, the index, the ID, the indicator, the resource ID, and the like may be replaced with each other.

When spatial relation information regarding SSB or CSI-RS and SRS is set for certain SRS resources, UE may transmit the SRS resources by using the same spatial domain filter as a spatial domain filter for receiving the SSB or CSI-RS. That is, in this case, the UE may assume that a UE reception beam of the SSB or CSI-RS is the same as a UE transmission beam of the SRS.

When spatial relation information regarding another SRS (reference SRS) and the SRS (target SRS) is set for certain SRS (target SRS) resources, UE may transmit target SRS resources by using the same spatial domain filter as a spatial domain filter for transmitting the reference SRS. That is, in this case, the UE may assume that a UE transmission beam of the reference SRS is the same as a UE transmission beam of the target SRS.

Note that a spatial domain filter for transmission of a base station, a downlink spatial domain transmission filter, and a transmission beam of the base station may be replaced with each other. The spatial domain filter for reception of the base station, the uplink spatial domain receive filter, and the reception beam of the base station may be replaced with each other.

Further, a spatial domain filter for transmission of the UE, an uplink spatial domain transmission filter, and a transmission beam of the UE may be replaced with each other. The spatial domain filter for reception of the UE, the downlink spatial domain receive filter, and the reception beam of the UE may be replaced with each other.

A beam instruction for an uplink control channel (physical uplink control channel (PUCCH)) may be configured by higher layer signaling. For example, when the PUCCH spatial relation information includes one spatial relation information (SpatialRelationInfo) parameter, UE may apply the set parameter to PUCCH. When the PUCCH spatial relation information includes more than one spatial relation information parameter, a parameter to be applied (activated) to PUCCH may be determined based on a MAC CE.

Note that the spatial relation information of PUCCH may be obtained by replacing SRS with PUCCH in the spatial relation information of SRS described above, so that the description will not be repeated.

A beam instruction for a PUSCH may be determined based on an SRS resource indicator (SRI) field included in DCI. UE may transmit PUSCH by using the same transmission beam as a corresponding SRS among the SRS set in the higher layer based on the specified SRI. Note that the beam instruction for the SRS may be similar to this.

For example, a UE for which codebook-based PUSCH transmission has been configured may determine (select), on the basis of an SRI field of DCI, an SRS resource included in an SRS resource set whose application of an SRS corresponds to a codebook.

A UE for which non-codebook-based PUSCH transmission has been configured may determine (select), on the basis of an SRI field of DCI, an SRS resource included in an SRS resource set whose application of an SRS corresponds to a non-codebook.

Note that the number of SRS resources included in the SRS resource set whose application corresponds to the codebook may be different from the number of SRS resources included in the SRS resource set whose application corresponds to the non-codebook. For example, the former may be two, and the latter may be four. In this case, for example, the SRI field size may be 1 bit for the former, 2 bits for the latter.

In the existing Rel-15 NR, the configuration information of the SRS resource is configured including the spatial relation information. That is, the SRS resource and the spatial relation are configured in one-to-one association in RRC.

Note that the spatial relation information (SRI) may correspond to a beam. For example, the UE may assume that UL transmissions corresponding to different pieces of SRI are transmitted using different beams.

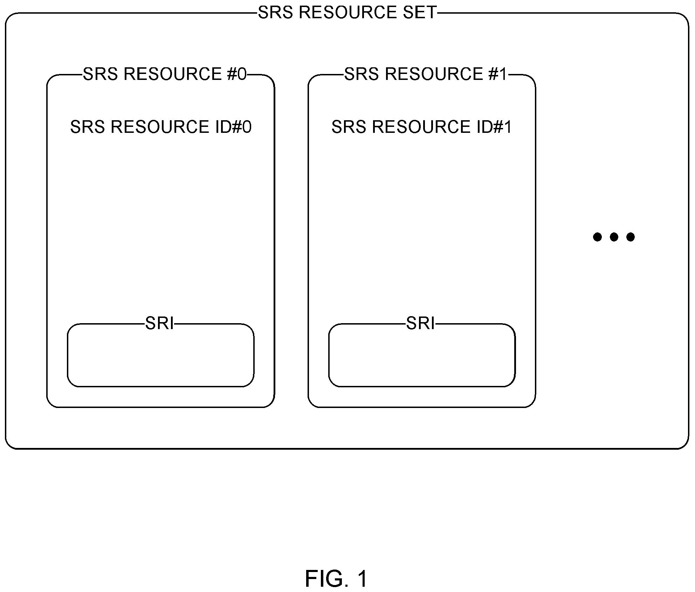

Fig. 1 is a diagram illustrating an example of configuration of SRS resources and SRI in the existing Rel-15 NR. In this example, it is assumed that an SRS resource set including a plurality of SRS resources is configured. An SRS resource #0 corresponding to an SRS resource ID #0 and an SRS resource #1 corresponding to an SRS resource ID #1 each have unique SRI configuration.

In the NR specification, it is considered to increase the number of UL beams (SRI) that can be used by the UE (for example, increase the number to 64). However, in the case of the existing NR specification illustrated in Fig. 1, in order to increase the number of SRI that can be used by the UE, it is necessary to increase the number of SRS resources to be configured accordingly, and there is a problem that the communication overhead for the configuration increases.

Therefore, the present inventors have conceived a method of appropriately configuring (or specifying) the spatial relation for the UL signal/channel. According to one aspect of the present disclosure, a UL beam of the SRS, a UL beam of the PUSCH, and the like can be flexibly controlled.

Hereinafter, embodiments according to the present disclosure will be described in detail with reference to the drawings. Radio communication methods according to the respective embodiments may be applied independently, or may be applied in combination.

Note that the SRI in the following embodiments may be replaced with spatial relation information (SRI for SRS) for the SRS. Further, "applying the SRI ID (or the SRI corresponding to the SRI ID) to a given signal/channel" may be replaced with "applying the spatial relation corresponding to the SRI ID to a given signal/channel".

In the following embodiments, the UE may ignore the spatial relation ("SRS-SpatialRelationInfo" included in the RRC information element "SRS-Resource"), which is configured in RRC in a one-to-one manner with the SRS resource as defined in the existing NR specification, even if the spatial relation is configured.

Further, an SRS resource set in the following embodiments may or may not be limited to an SRS resource set whose application is a codebook or a non-codebook.

### (Radio Communication Method)

### <First Embodiment>

In a first embodiment, for the UE, a plurality of pieces of spatial relation information (SRI) may be configured per one SRS resource set by higher layer signaling.

For example, for the UE, one or more pieces of SRI may be configured for a set of SRS resources. The information of the spatial relation may correspond to the RRC information element "SRS-SpatialRelationInfo" of the existing Rel-15 NR specification, or may correspond to an RRC information element obtained by extending, changing, or modifying the RRC information element.

For the UE, a given number (for example, M) of pieces of SRI may be configured per one SRS resource set by RRC signaling. Here, the given number M may be, for example, 8, 16, 32, 64, or the like, or may be larger than 64.

The SRI may be configured in association with a given ID (which may be referred to as an SRI ID or the like) for identifying (specifying) the SRI.

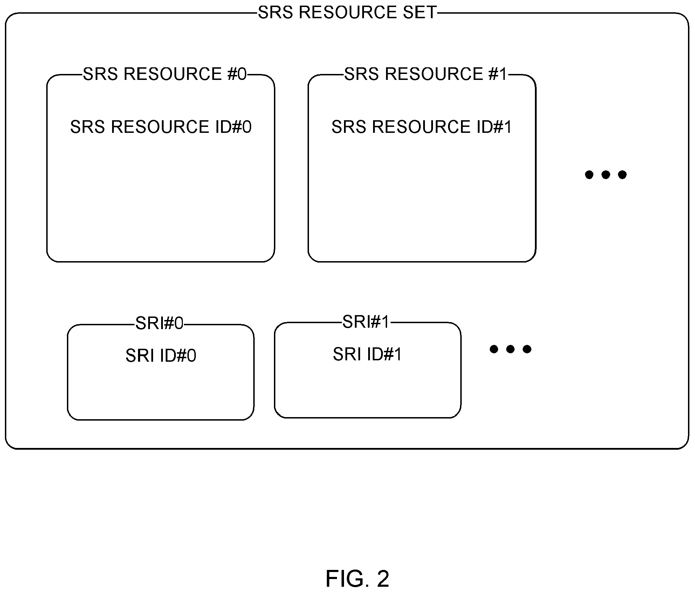

Fig. 2 is a diagram illustrating an example of configuration of SRS resources and SRI according to the first embodiment. In this example, unlike Fig. 1, the SRS resource and the SRI included in the SRS resource set are not fixedly associated with each other. For example, the SRI #0 corresponding to the SRI ID #0, the SRI #1 corresponding to the SRI ID #1, and the like may be configured for the UE.

For the UE, one SRI may be activated or deactivated with respect to one SRS resource set by the MAC CE among the configured M pieces of SRI. The MAC CE may designate an SRI ID to be activated or deactivated. The MAC CE may be referred to as a spatial relation activation/deactivation MAC CE (SRS spatial relation activation/deactivation MAC CE), an SRI activation/deactivation MAC CE, or the like for the SRS.

The UE may control one SRI to be active for one SRS resource set at a certain time on the basis of the SRI activation/deactivation MAC CE when more than one piece of SRI related to the SRS resource set is configured.

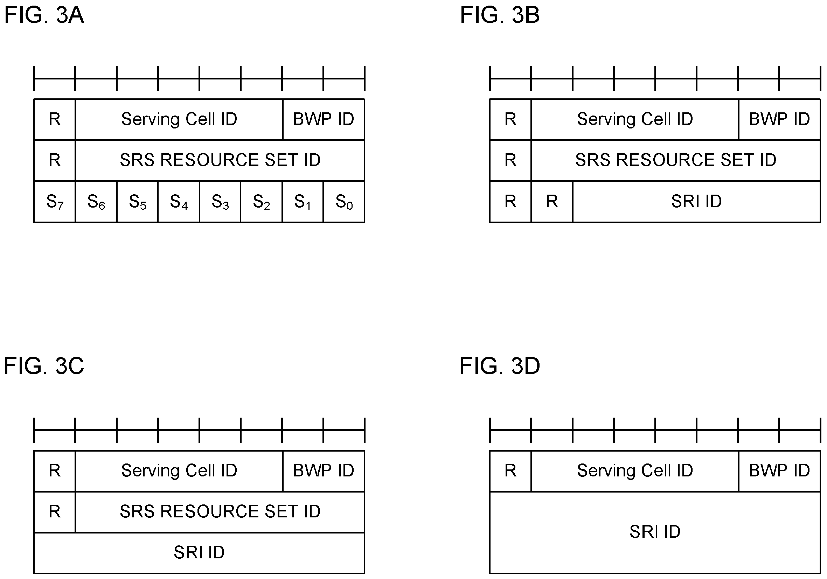

Figs. 3A to 3D are diagrams illustrating an example of an SRI activation/deactivation MAC CE according to the first embodiment. Each example indicates a bit string constituting the MAC CE, and is expressed by a total of 3 octets (8 bits × 3 = 24 bits) of the illustrated octets (Octet, Oct) 1 to 3. Note that the number of bits of the MAC CE is not limited thereto.

The MAC CE may include information such as an application target serving cell ID ("Serving Cell ID" field), a BWP ID ("BWP ID" field), and an SRS resource set ID ("SRS Resource Set ID" field).

The field of "R" may mean a reserved bit for future extension.

The MAC CE in Fig. 3A includes a field of "Sᵢ" (for example, i = 0 to 7). When a certain field of Sᵢ indicates 1, the UE may activate the SRI of the SRI ID #i. When a certain field of Sᵢ indicates 0, the UE may deactivate the SRI of the SRI ID #i. Note that Fig. 3A illustrates an example of M = 8, but in a case where M is another value, the number of fields of Sᵢ may be increased or decreased.

The MAC CE in Fig. 3B includes substantially the same configuration as that of the MAC CE in Fig. 3A, except that the MAC CE in Fig. 3B includes a field of an SRI ID. When M is relatively large (for example, M = 64), the MAC CE illustrated in this example can suitably reduce the number of bits for indicating the SRI ID to be activated.

The MAC CE of Fig. 3C includes substantially the same configuration as that of the MAC CE of Fig. 3B, except that reserved bits are slightly reduced, and the field size of the SRI ID is increased from 6 bits to 8 bits.

In the field of the SRI ID in Fig. 3C, an ID of 0 to 255 can be designated. When M is considerably relatively large (for example, M = 256), the MAC CE shown in this example can suitably reduce the number of bits.

The MAC CE in Fig. 3D includes substantially the same configuration as that of the MAC CE in Fig. 3C, except that there is no SRS resource set ID field, and the field size of the SRI ID is increased to 16 bits.

The field of SRI ID in Fig. 3D can designate an ID corresponding to M > 256. When M is very large (for example, M > 256), the MAC CE shown in this example can suitably reduce the number of bits.

The UE may assume a configuration of an SRI activation/deactivation MAC CE on the basis of a configured number M of SRI IDs according to at least one of the following:
- When M is a value included in a first range (for example, M ≤ 8), the configuration corresponds to the configuration of Fig. 3A,
- When M is a value included in a second range (for example, 8 < M ≤ 64), the configuration corresponds to the configuration of Fig. 3B,
- When M is a value included in a third range (for example, 64 < M ≤ 256), the configuration corresponds to the configuration of Fig. 3C, and
- When M is a value included in a fourth range (for example, 256 < M), the configuration corresponds to the configuration of Fig. 3D.

Here, each of the first, second, third, and fourth ranges may be set by higher layer signaling or may be defined by a specification.

Note that, when receiving the MAC CE as illustrated in Figs. 3B to 3D, the UE may deactivate the SRI ID when the SRI ID designated by the MAC CE is already active. When the SRI ID designated by the MAC CE is not active, if there is another SRI ID that is already active, the UE may deactivate the other SRI ID, and activate the designated SRI ID.

The UE may assume that the MAC CE as in Figs. 3B to 3D includes information (for example, it may be indicated by one or more R fields) indicating the activation or deactivation of the SRI ID. The UE may control the activation/deactivation of the designated SRI ID on the basis of the information.

Note that when the SRS resource set ID field is included in the MAC CE as in Figs. 3A to 3C, the UE may assume that the SRI is activated/deactivated on an SRS resource set basis. When the SRS resource set ID field is not included in the MAC CE as in Fig 3D, the UE may assume that the SRI is activated/deactivated in common for a plurality of SRS resource sets (in other words, in units of BWPs, in units of cells, and the like). The same applies to other embodiments.

The UE may assume that the SRI ID activated by the MAC CE described above may be applied to transmission of a given signal/channel (for example, PUSCH or SRS).

According to the first embodiment described above, the UE can apply the same spatial relation (the SRI designated (activated) by the MAC CE) to transmission to the PUSCH/SRS, regardless of the SRS resource of the SRS resource set.

### <Second Embodiment>

In the second embodiment, for the UE, a plurality of pieces of spatial relation information (SRI) may be configured for one SRS resource by higher layer signaling.

For example, for the UE, one or more pieces of SRI may be configured for an SRS resource. The information of the spatial relation may correspond to the RRC information element "SRS-SpatialRelationInfo" of the existing Rel-15 NR specification, or may correspond to an RRC information element obtained by extending, changing, or modifying the RRC information element.

For the UE, a given number (for example, M) of pieces of SRI may be configured per one SRS resource by RRC signaling. Here, the given number M may be, for example, 8, 64, or the like, or may be larger than 64.

The SRI may be configured in association with a given ID (which may be referred to as an SRI ID or the like) for identifying (specifying) the SRI.

In the second embodiment, the SRS resource and the SRI configuration similar to those in Fig. 2 may be assumed, or the SRS resource configuration may include a plurality of SRI configurations.

For the UE, one SRI may be activated or deactivated with respect to one SRS resource by the MAC CE among the configured M pieces of SRI. The MAC CE may be obtained by replacing the SRS resource set ID of the MAC CE described in the first embodiment with the SRS resource ID, and thus the description thereof will not be repeated.

The UE may assume that the SRI ID activated by the MAC CE described above is applied with respect to the SRS resource designated by the DCI for transmission of a given signal/channel (for example, PUSCH or SRS).

For example, it is assumed that the SRI (SRS Resource Indicator) field = 0 of the DCI corresponds to the SRS resource #0, and the SRI field = 1 corresponds to the SRS resource #1. The MAC CE described above may perform activation such that the SRS resource #0 corresponds to the SRI #0 and the SRS resource #1 corresponds to the SRI #1, or may perform activation such that the SRS resource #0 corresponds to the SRI #2 and the SRS resource #1 corresponds to the SRI #0.

According to the second embodiment described above, the UE can apply the individual spatial relation (the SRI designated (activated) by the MAC CE) for each SRS resource of the SRS resource set to the PUSCH/SRS to transmission to the PUSCH/SRS. In one aspect of the second embodiment, different pieces of SRI can be flexibly assumed depending on the value of the SRI field of the DCI (that is, the SRS resource).

### <Third Embodiment>

In a third embodiment, the UE may assume that the spatial relation of the SRS is the same as the spatial relation of the given PUCCH. For example, in the first or second embodiment described above, the UE may assume that the spatial relation of the SRS is the same as the spatial relation of the given PUCCH in a case where the SRI of the SRS is not configured or the SRI of the SRS is not active at all.

The UE may assume that the spatial relation of the given PUCCH is applied to the transmission of the given signal/channel (for example, PUSCH or SRS).

The spatial relation of the given PUCCH may be a spatial relation corresponding to any one of the following or a combination thereof:
- a spatial relation of the latest PUCCH (for example, the spatial relation of the most recently transmitted PUCCH),
- a spatial relation corresponding to a specific PUCCH SRI (spatial relation information) (for example, a spatial relation of PUCCH SRI ID = 0),
- a default spatial relation of the PUCCH,
- a spatial relation applied to a given serving cell, or
- a spatial relation applied to a given BWP.

According to the third embodiment described above, the UE can apply the same spatial relation as the PUCCH to transmission to the PUSCH/SRS. Since the PUCCH is likely to use an appropriate spatial relation for communicating with the base station, it can be expected that communication of the PUSCH/SRS is preferably maintained.

### <Fourth Embodiment>

In the first to third embodiments described above, an example in which one piece of SRI included in one SRS resource set is applied to transmission of a given signal/channel (for example, activating on the MAC CE) has been described, but the present invention is not limited thereto.

In a fourth embodiment, the UE may apply a plurality of pieces of SRI included in one SRS resource set to transmission of a given signal/channel. The fourth embodiment is preferable when the UE performs UL transmission to a plurality of transmission/reception points (TRP) (multi-TRPs).

Note that, in the present disclosure, a panel, an uplink (UL) transmission entity, a TRP, a demodulation reference signal (DMRS) port, a DMRS port group, a code division multiplexing (CDM) group, a codeword, a base station, and the like may be replaced with each other.

The UE can improve the reliability of the signal/channel by transmitting a given signal/channel to which different pieces of SRI are applied to the multi-TRP.

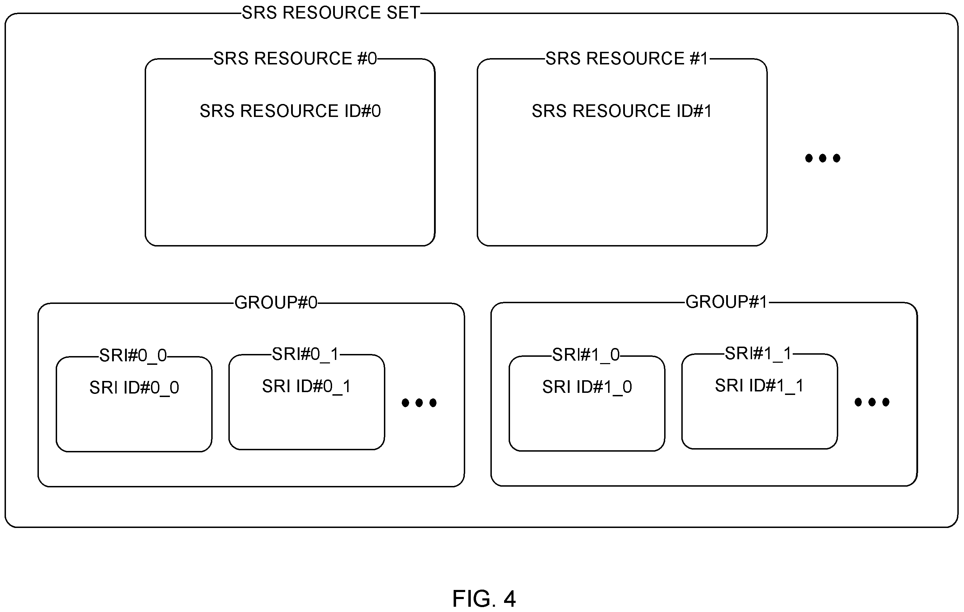

Fig. 4 is a diagram illustrating an example of configuration of SRS resources and SRI according to the fourth embodiment. This example is similar to Fig. 2, except that the configuration of the SRS resource set includes configuration of a plurality of groups. One group may include one or more SRI configurations. Although only two groups are illustrated in Fig. 4, the number of groups may be three or more.

Further, the configuration of each group may include an ID (group ID) for identifying the group. This group may be referred to as an SRI group, an SRI set, or the like. One group may be associated with at least one TRP.

For the UE, one piece of SRI may be activated or deactivated per one group by the MAC CE among the configured pieces of SRI. The MAC CE may be the SRI activation/deactivation MAC CE described above. Note that the MAC CE may include a group ID. The group ID may be indicated, for example, by using one or more "R" fields of the MAC CE in Figs. 3A to 3D.

Further, pieces of SRI of a plurality of groups may be simultaneously activated/deactivated by one MAC CE.

An ID (which may be referred to as a joint SRI ID) obtained by joining (combining) the SRI IDs of the groups may be configured. For example, configuration may be performed for the UE by higher layer signaling in such a manner that the joint SRI ID #0 corresponds to the SRI #0 of the group #0 and the SRI #1 of the group #1, the joint SRI ID #1 corresponds to the SRI #1 of the group #0 and the SRI #2 of the group #1,..., or the like.

In this case, the SRI of each group may be activated using the MAC CE in which the SRI ID field of the MAC CE described above is replaced with the joint SRI ID field.

The transmission applying the plurality of pieces of SRI activated by the MAC CE may be performed on a same SRS resource, or may be performed on different SRS resources.

For the UE, the correspondence between the group and the SRS resource may be configured by higher layer signaling. For example, the configuration in which the SRS resource #0 corresponds to the group #0 and the SRS resource #1 corresponds to the group #1 may be notified to the UE by using RRC signaling.

In this case, assuming that the SRI (SRS Resource Indicator) field = 0 of the DCI corresponds to the SRS resource #0 and the SRI field = 1 corresponds to the SRS resource #1, the UE may apply the activated SRI of the group #0 in the former case and apply the activated SRI of the group #1 in the latter case.

Further, even when the correspondence between the group and the SRS resource is not configured in the higher layer, when a plurality of SRI fields are included in the DCI, it may be assumed that these SRI fields designate the SRS resource of each group. The UE may apply the SRI of the activated group #0 to the SRS resource corresponding to the first SRI field, and apply the SRI of the activated group #1 to the SRS resource corresponding to the second SRI field.

Further, the UE may determine, on the basis of at least one of the following, the group of pieces of SRI corresponding to the SRS resource designated by the DCI:
- the TRP that has transmitted the DCI;
- a format of the DCI;
- a field included in the DCI;
- a radio network temporary identifier (RNTI) corresponding to the DCI;
- a transport block size (TBS) of data scheduled by the DCI;
- a time length (duration, for example, number of symbols) of UL transmission (for example, the PUSCH) scheduled by the DCI;
- applications of data scheduled by the DCI (for example, for ultra reliable and low latency (for example, ultra reliable and low latency communications (URLLC)), or for high speed and large capacity (for example, enhanced mobile broad band (eMBB))).

Further, in the above example, an example in which one SRS resource set includes a plurality of groups has been described, but the present invention is not limited thereto. Different groups may be configured by using different SRS resource sets.

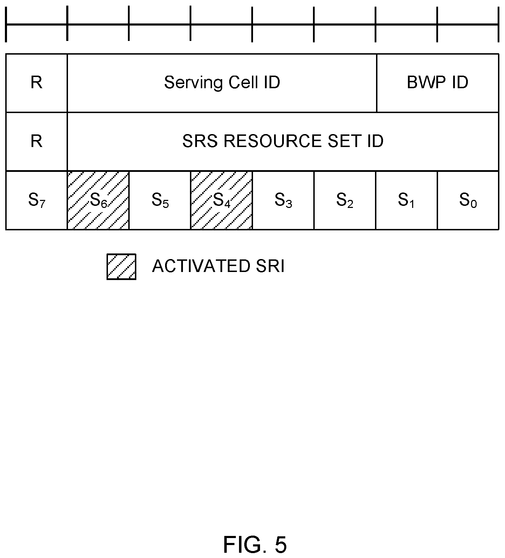

Note that the fourth embodiment is also applicable to a case where no group is set (for example, a plurality of SRIs are simply configured by the higher layer as illustrated in Fig. 2) . In this case, the group may be replaced with a TRP. Fig. 5 is a diagram illustrating an example of an SRI activation/deactivation MAC CE according to the fourth embodiment.

Unlike the MAC CE in Fig. 3A, the MAC CE in Fig. 5 may have a plurality of Si values of 1. In this example, two values of S4 and S6 are 1. A plurality of pieces of SRI corresponding to a value of Si whose value is 1 may be applied to each TRP. The UE may determine which SRI ID #i is applied to which TRP on the basis of a given rule.

For example, the UE may assume that the activated SRI IDs correspond to TRPs in ascending or descending order. That is, when the activated SRI IDs and the TRP IDs are arranged in ascending order or descending order, it may be assumed that the activated SRI IDs and the TRP IDs have one-to-one correspondence from the smaller one. In the case of Fig. 5, the UE may apply the SRI ID #4 to TRP #0 and apply the SRI ID #6 to TRP #1.

Note that the MAC CE including the plurality of SRI IDs is not limited to the configuration of Fig. 5. For example, in the MAC CE in Figs. 3B to 3D, a MAC CE including a plurality of SRI ID fields may be used.

According to the fourth embodiment described above, the UE can apply the spatial relation appropriate for the UL transmission, for example, even when the multi-TRP is configured.

### <Others>

At least one of the number of SRS resources per SRS resource set supported by the UE, the number of pieces of SRI per SRS resource set, and the like may be reported to a network (base station) as UE capability information (UE capability). Further, whether the UE to which each of the above-described embodiments is applied is applicable may be determined on the basis of the capability information. For example, a UE in which the number of supported SRS resources per SRS resource set is in a given range (for example, less than 16, less than 64, or the like) may be assumed to be controlled on the basis of at least one of the above embodiments.

Note that, in Figs. 2, 4, and the like, an example in which the SRI configuration is included in the SRS resource set configuration has been described, but the present invention is not limited thereto. The configuration of the SRI may be performed separately (independently) from the configuration of the SRS resource set.

Further, each of the above-described embodiments may be applied to a case where a multi-TRP is not used (a case of a single TRP) .

### (Radio Communication System)

Hereinafter, a configuration of a radio communication system according to one embodiment of the present disclosure will be described. In this radio communication system, communication is performed using one or a combination of the radio communication methods according to the embodiments of the present disclosure.

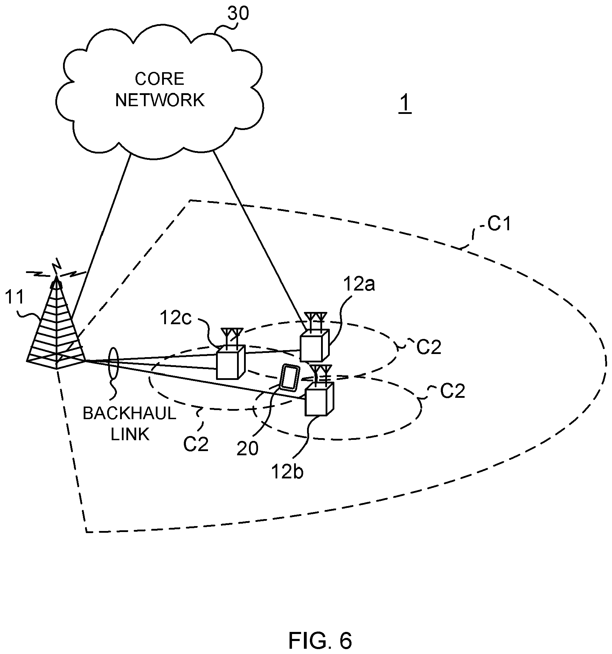

Fig. 6 is a diagram illustrating an example of a schematic configuration of a radio communication system according to one embodiment. A radio communication system 1 may be a system that implements communication using long term evolution (LTE), 5th generation mobile communication system New Radio (5G NR), and the like drafted as the specification by third generation partnership project (3GPP) .

Further, the radio communication system 1 may support dual connectivity (multi-RAT dual connectivity (MR-DC)) between a plurality of radio access technologies (RATs). The MR-DC may include dual connectivity between LTE (Evolved Universal Terrestrial Radio Access (E-UTRA)) and NR (E-UTRA-NR Dual Connectivity (EN-DC)), dual connectivity between NR and LTE (NR-E-UTRA Dual Connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be located in at least one cell. The arrangement, number, and the like of cells and the user terminal 20 are not limited to the aspects illustrated in the drawings. Hereinafter, the base stations 11 and 12 will be collectively referred to as base stations 10 unless specified otherwise.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency range 1 (FR1) and a second frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of FR1 and FR2 are not limited thereto, and, for example, FR1 may correspond to a frequency range higher than FR2.

Further, the user terminal 20 may perform communication in each CC using at least one of time division duplex (TDD) and frequency division duplex (FDD).

The plurality of base stations 10 may be connected by wire (for example, an optical fiber or an X2 interface in compliance with common public radio interface (CPRI)) or wirelessly (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), and the like.

The user terminal 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, as a downlink channel, a physical downlink shared channel (PDSCH) shared by each user terminal 20, a physical broadcast channel (PBCH), a physical downlink control channel (PDCCH), or the like may be used.

Further, in the radio communication system 1, as an uplink channel, a physical uplink shared channel (PUSCH) shared by each user terminal 20, a physical uplink control channel (PUCCH), a physical random access channel (PRACH), or the like may be used.

User data, higher layer control information, and a system information block (SIB) and the like are transmitted by the PDSCH. The PUSCH may transmit user data, higher layer control information, and the like. Further, the PBCH may transmit a master information block (MIB).

The PDCCH may transmit lower layer control information. The lower layer control information may include, for example, downlink control information (DCI) including scheduling information of at least one of the PDSCH and the PUSCH.

Note that DCI that schedules the PDSCH may be referred to as DL assignment, DL DCI, or the like, and DCI that schedules the PUSCH may be referred to as UL grant, UL DCI, or the like. Note that the PDSCH may be replaced with DL data, and the PUSCH may be replaced with UL data.

A control resource set (CORESET) and a search space may be used to detect the PDCCH. The CORESET corresponds to a resource that searches for DCI. The search space corresponds to a search area and a search method for PDCCH candidates. One CORESET may be associated with one or a plurality of search spaces. The UE may monitor the CORESET associated with a certain search space based on search space configuration.

One search space may correspond to a PDCCH candidate corresponding to one or a plurality of aggregation levels. One or a plurality of search spaces may be referred to as a search space set. Note that "search space", "search space set", "search space configuration", "search space set configuration", "CORESET", "CORESET configuration", and the like in the present disclosure may be replaced with each other.

Uplink control information (UCI) including at least one of channel state information (CSI), delivery confirmation information (which may be referred to as, for example, hybrid automatic repeat request acknowledgement (HARQ-ACK), ACK/NACK, or the like), scheduling request (SR), and the like may be transmitted by the PUCCH. By means of the PRACH, a random access preamble for establishing a connection with a cell may be transmitted.

Note that in the present disclosure, downlink, uplink, and the like may be expressed without "link". Further, various channels may be expressed without adding "physical" at the beginning thereof.

In the radio communication system 1, a synchronization signal (SS), a downlink reference signal (DL-RS), and the like may be transmitted. In the radio communication systems 1, a cell-specific reference signal (CRS), a channel state information reference signal (CSI-RS), a demodulation reference signal (DMRS), a positioning reference signal (PRS), a phase tracking reference signal (PTRS), and the like may be transmitted as the DL-RS.

The synchronization signal may be, for example, at least one of a primary synchronization signal (PSS) and a secondary synchronization signal (SSS). A signal block including SS (PSS or SSS) and PBCH (and DMRS for PBCH) may be referred to as an SS/PBCH block, an SS Block (SSB), and the like. Note that the SS, the SSB, or the like may also be referred to as a reference signal.

Further, in the radio communication system 1, a sounding reference signal (SRS), a demodulation reference signal (DMRS), and the like may be transmitted as an uplink reference signal (UL-RS). Note that, DMRSs may be referred to as "user terminal-specific reference signals (UE-specific Reference Signals)."

### (Base Station)

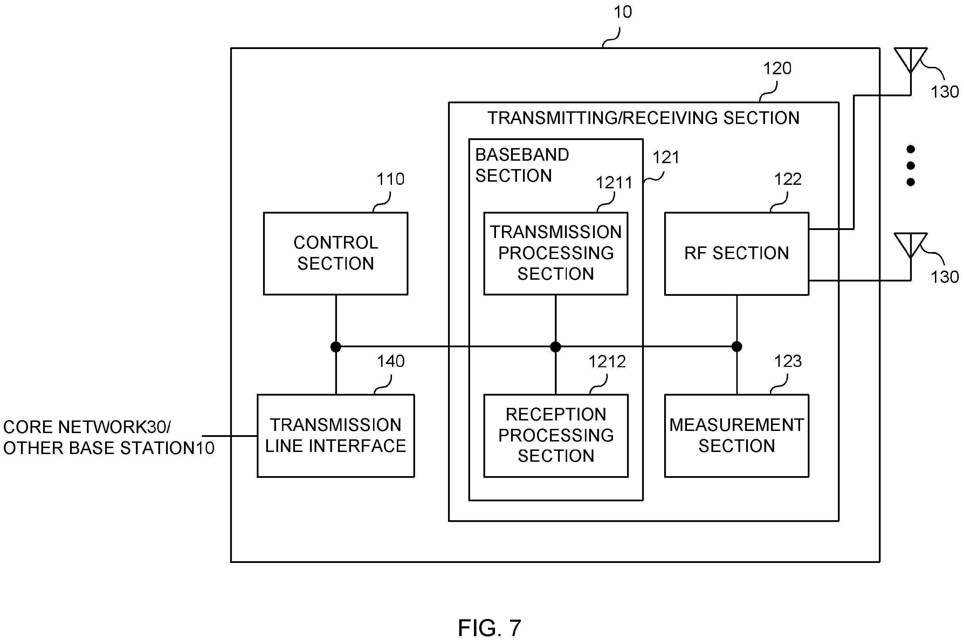

Fig. 7 is a diagram illustrating an example of a configuration of a base station according to one embodiment. The base station 10 includes a control section 110, a transmitting/receiving section 120, a transmission/reception antenna 130, and a transmission line interface 140. Note that one or more of the control sections 110, one or more of the transmitting/receiving sections 120, one or more of the transmission/reception antennas 130, and one or more of the transmission line interfaces 140 may be included.

Note that, although this example primarily indicates functional blocks of characteristic parts of the present embodiment, it may be assumed that the base station 10 has other functional blocks that are necessary for radio communication as well. A part of processing of each section described below may be omitted.

The control section 110 controls the entire base station 10. The control section 110 can be constituted by a controller, a control circuit, or the like, which is described based on common recognition in the technical field to which the present disclosure relates.

The control section 110 may control signal generation, scheduling (for example, resource allocation or mapping), and the like. The control section 110 may control transmission/reception, measurement, and the like using the transmitting/receiving section 120, the transmission/reception antenna 130, and the transmission line interface 140. The control section 110 may generate data to be transferred as a signal, control information, a sequence, and the like, and may transfer the data, the control information, the sequence, and the like to the transmitting/receiving section 120. The control section 110 may perform call processing (such as configuration or release) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can be constituted by a transmitter/receiver, an RF circuit, a base band circuit, a filter, a phase shifter, a measurement circuit, a transmission/reception circuit, and the like, which are described based on common recognition in the technical field to which the present disclosure relates.

The transmitting/receiving section 120 may be constituted as an integrated transmitting/receiving section, or may be constituted by a transmitting section and a reception section. The transmitting section may be constituted by the transmission processing section 1211 and the RF section 122. The receiving section may be constituted by the reception processing section 1212, the RF section 122, and the measurement section 123.

The transmission/reception antenna 130 can be constituted by an antenna described based on common recognition in the technical field to which the present disclosure relates, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam and a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like, for example, on data or control information acquired from the control section 110 to generate a bit string to be transmitted.

The transmitting/receiving section 120 (transmission processing section 1211) may perform transmission processing such as channel encoding (which may include error correcting coding), modulation, mapping, filtering processing, discrete Fourier transform (DFT) processing (if necessary), inverse fast Fourier transform (IFFT) processing, precoding, or digital-analog transform on the bit string to be transmitted, and may output a base band signal.

The transmitting/receiving section 120 (RF section 122) may perform modulation to a radio frequency band, filtering processing, amplification, and the like on the base band signal, and may transmit a signal in the radio frequency band via the transmission/reception antenna 130.

Meanwhile, the transmitting/receiving section 120 (RF section 122) may perform amplification, filtering processing, demodulation to a base band signal, and the like on the signal in the radio frequency band received by the transmission/reception antenna 130.

The transmitting/receiving section 120 (reception processing section 1212) may apply reception processing such as analog-digital transform, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired base band signal to acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure received power (e.g., reference signal received power (RSRP)), received quality (e.g., reference signal received quality (RSRQ), a signal to interference plus noise ratio (SINR), or a signal to noise ratio (SNR)), signal strength (e.g., received signal strength indicator (RSSI)), propagation path information (e.g., CSI), and the like. The measurement result may be output to the control section 110.

The transmission line interface 140 may transmit/receive a signal (backhaul signaling) to and from an apparatus included in the core network 30, other base stations 10, and the like, and may acquire, transmit, and the like user data (user plane data), control plane data, and the like for the user terminal 20.

Note that the transmitting section and the receiving section of the base station 10 in the present disclosure may be constituted by at least one of the transmitting/receiving section 120, the transmission/reception antenna 130, and the transmission line interface 140.

Note that the transmitting/receiving section 120 may transmit the MAC CE for activating the SRI related to the SRS resource set.

The control section 110 may apply the SRI activated by the MAC control element to given uplink transmission (for example, PUSCH or SRS). A transmitting/receiving section 220 may perform the given uplink transmission by applying the activated SRI.

The transmitting/receiving section 120 may receive the UL signal/channel transmitted from the user terminal 20 by applying the SRI activated by the MAC control element.

### (user terminal)

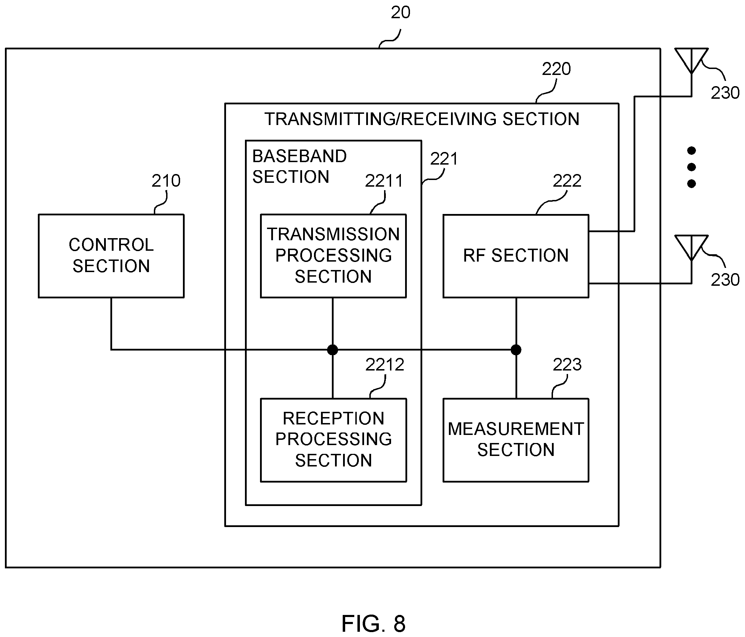

Fig. 8 is a diagram illustrating an example of a configuration of user terminal according to one embodiment. The user terminal 20 includes a control section 210, a transmitting/receiving section 220, and a transmission/reception antenna 230. Note that one or more of the control sections 210, one or more of the transmitting/receiving sections 220, and one or more of the transmission/reception antennas 230 may be included.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can be constituted by a controller, a control circuit, or the like, which is described based on common recognition in the technical field to which the present disclosure relates.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted by a transmitter/receiver, an RF circuit, a base band circuit, a filter, a phase shifter, a measurement circuit, a transmission/reception circuit, and the like, which are described based on common recognition in the technical field to which the present disclosure relates.

The transmitting/receiving section 220 may be constituted as an integrated transmitting/receiving section, or may be constituted by a transmitting section and a receiving section. The transmitting section may be constituted by the transmission processing section 2211 and the RF section 222. The reception section may be constituted by the reception processing section 2212, the RF section 222, and the measurement section 223.

The transmission/reception antenna 230 can be constituted by an antenna described based on common recognition in the technical field to which the present disclosure relates, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data acquired from the control section 210 or control information to generate a bit string to be transmitted.

The transmitting/receiving section 220 (transmission processing section 2211) may perform transmission processing such as channel encoding (which may include error correcting coding), modulation, mapping, filtering processing, DFT processing (if necessary), IFFT processing, precoding, or digital-analog transform on a bit string to be transmitted, and may output a base band signal.

Note that whether or not to apply DFT processing may be determined based on configuration of transform precoding. When transform precoding is enabled for a channel (for example, PUSCH), the transmitting/receiving section 220 (transmission processing section 2211) may perform DFT processing as the transmission processing in order to transmit the channel using a DFT-s-OFDM waveform. When transform precoding is not enabled for a channel (for example, PUSCH), the transmitting/receiving section 220 (transmission processing section 2211) may not perform DFT processing as the transmission processing.

The transmitting/receiving section 220 (RF section 222) may perform modulation to a radio frequency band, filtering processing, amplification, and the like on the base band signal, and may transmit a signal in the radio frequency band via the transmission/reception antenna 230.

Meanwhile, the transmitting/receiving section 220 (RF section 222) may perform amplification, filtering processing, demodulation to a base band signal, and the like on the signal in the radio frequency band received by the transmission/reception antenna 230.

The transmitting/receiving section 220 (reception processing section 2212) may acquire user data and the like by applying reception processing such as analog-digital transform, FFT processing, IDFT processing (if necessary), filtering processing, demapping, demodulation, decoding (which may include error correction decoding), MAC layer processing, RLC layer processing, or PDCP layer processing on the acquired base band signal.

The transmitting/receiving section 220 (measurement section 223) may perform measurement on the received signal. For example, the measurement section 223 may perform RRM measurement, CSI measurement, and the like based on the received signal. The measurement section 223 may measure received power (e.g., RSRP), received quality (e.g., RSRQ, SINR, or SNR), signal strength (e.g., RSSI), propagation path information (e.g., CSI), and the like. The measurement result may be output to the control section 210.

Note that the transmitting section and the receiving section of the user terminal 20 in the present disclosure may include at least one of the transmitting/receiving section 220 and the transmission/reception antenna 230.

Note that the transmitting/receiving section 220 may receive a medium access control element (MAC CE) for activating spatial relation information (SRI) related to a sounding reference signal (SRS) resource set. The SRS resource set may include an SRS resource. That is, the SRS resource set may be replaced with the SRS resource.

The control section 210 may apply the SRI activated by the MAC control element to given uplink transmission (for example, PUSCH or SRS). A transmitting/receiving section 220 may perform the given uplink transmission by applying the activated SRI.

When the MAC control element includes the field of the identifier of the SRS resource set (for example, the SRS resource set ID), the control section 210 may apply the SRI activated by the MAC control element regardless of the SRS resource designated by the downlink control information (DCI) for the given uplink transmission.

When the MAC control element includes the field of the identifier of the SRS resource (for example, the SRS resource ID), the control section 210 may apply the SRI activated by the MAC control element on the basis of the SRS resource designated by the downlink control information for the given uplink transmission.

### (Hardware Configuration)

Note that the block diagrams that have been used to describe the above embodiments illustrate blocks in functional units. These functional blocks (configuration units) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (using wire, wireless, or the like, for example) and using these plural apparatuses. The functional blocks may be implemented by combining software with the above-described single apparatus or the above-described plurality of apparatuses.

Here, the function includes, but is not limited to, deciding, determining, judging, calculating, computing, processing, deriving, investigating, searching, ascertaining, receiving, transmitting, outputting, accessing, solving, selecting, choosing, establishing, comparing, assuming, expecting, considering, broadcasting, notifying, communicating, forwarding, configuring, reconfiguring, allocating, mapping, and assigning. For example, a functional block (configuration unit) that causes transmission to function may be referred to as a transmitting unit, a transmitter, and the like. In any case, as described above, the implementation method is not particularly limited.

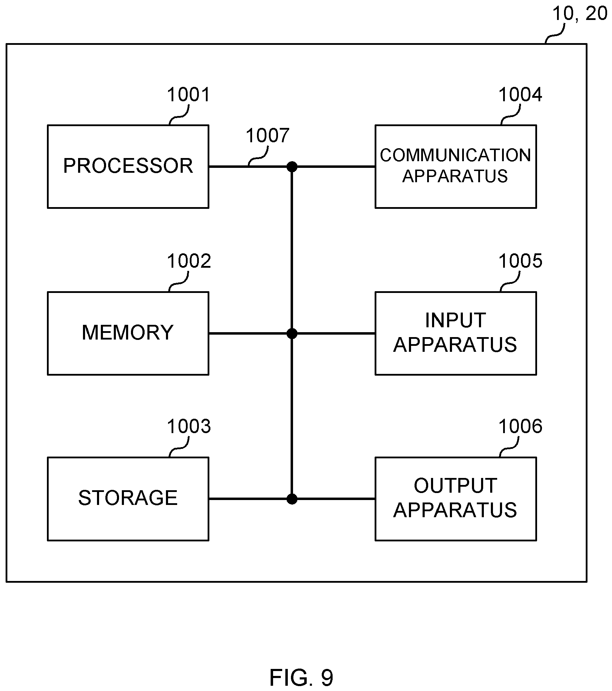

For example, the base station, the user terminal, and the like according to one embodiment of the present disclosure may function as a computer that executes the processing of the radio communication method of the present disclosure. Fig. 9 is a diagram illustrating an example of a hardware configuration of a base station and user terminal according to one embodiment. Physically, the above-described base station 10 and user terminal 20 may be configured as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may be configured to include one or a plurality of apparatuses illustrated in the drawings, or may be configured without including some apparatuses.

For example, although only one processor 1001 is shown, a plurality of processors may be provided. Further, the processing may be executed by one processor, or the processing may be executed in sequence or using other different methods simultaneously by two or more processors. Note that the processor 1001 may be implemented with one or more chips.

Each of functions of the base station 10 and the user terminal 20 is implemented by causing given software (program) to be read on hardware such as the processor 1001 or the memory 1002, thereby causing the processor 1001 to perform operation, controlling communication via the communication apparatus 1004, and controlling at least one of reading and writing of data in the memory 1002 and the storage 1003.

The processor 1001 may control the whole computer by, for example, running an operating system. As the processor 1001, provided may be a central processing unit (CPU) including an interface with peripheral equipment, a control device, an operation device, a register, and the like. For example, at least a part of the above-described control section 110(210), transmitting/receiving section 120(220), and the like may be implemented by the processor 1001.

Furthermore, the processor 1001 reads programs (program codes), software modules, or data, from at least one of the storage 1003 and the communication apparatus 1004, into the memory 1002, and executes various processing according to these. As the program, a program to cause a computer to execute at least a part of the operation described in the above-described embodiment is used. For example, the control section 110(210) may be implemented by a control program that is stored in the memory 1002 and operates in the processor 1001, and another functional block may be implemented similarly.

The memory 1002 is a computer-readable recording medium, and may be constituted by, for example, at least one of a read only memory (ROM), an erasable programmable ROM (EPROM), an electrically EPROM (EEPROM), a random access memory (RAM) and/or other appropriate storage media. The memory 1002 may be referred to as a "register", a "cache", a "main memory (primary storage apparatus)", and the like. The memory 1002 can store a program (program code), a software module, and the like, which are executable for implementing the radio communication method according to one embodiment of the present disclosure.

The storage 1003 is a computer-readable recording medium, and may be constituted by, for example, at least one of a flexible disk, a floppy (registered trademark) disk, a magneto-optical disk (for example, a compact disc ROM (CD-ROM) and the like), a digital versatile disc, a Blu-ray (registered trademark) disk), a removable disk, a hard disk drive, a smart card, a flash memory device (for example, a card, a stick, a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication by using at least one of a wired network and a wireless network, and may be referred to as, for example, a network device, a network controller, a network card, a communication module, and the like. The communication apparatus 1004 may be constituted by a high frequency switch, a duplexer, a filter, a frequency synthesizer, and the like in order to implement, for example, at least one of frequency division duplex (FDD) and time division duplex (TDD). For example, the transmitting/receiving section 120(220), the transmission/reception antenna 130(230), and the like described above may be implemented by the communication apparatus 1004. The transmitting/receiving section 120(220) may be implemented by physically or logically separating a transmitting section 120a(220a) and a receiving section 120b(220b) from each other.

The input apparatus 1005 is an input device for receiving input from the outside (for example, a keyboard, a mouse, a microphone, a switch, a button, a sensor and so on). The output apparatus 1006 is an output device that performs output to the outside (e.g., a display, a speaker, a light emitting diode (LED) lamp, and the like). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented with at least one of these pieces of hardware.

### (Modification)

Note that terms described in the present disclosure and terms necessary for understanding the present disclosure may be replaced with terms that have the same or similar meanings. For example, a channel, a symbol, and a signal (signal or signaling) may be read interchangeably. Further, the signal may be a message. A reference signal can be abbreviated as an "RS", and may be referred to as a "pilot", a "pilot signal", and the like, depending on which standard applies. Furthermore, a component carrier (CC) may be referred to as a cell, a frequency carrier, a carrier frequency, and the like.

A radio frame may include one or a plurality of periods (frames) in a time domain. Each of the one or plurality of periods (frames) constituting the radio frame may be referred to as a "subframe". Furthermore, a subframe may include one or a plurality of slots in the time domain. A subframe may be a fixed time duration (for example, 1 ms) that is not dependent on numerology.

Here, numerology may be a communication parameter applied to at least one of transmission and reception of a certain signal or channel. Numerology may indicate at least one of, for example, a subcarrier spacing (SCS), a bandwidth, a symbol length, a cyclic prefix length, a transmission time interval (TTI), the number of symbols per TTI, a radio frame configuration, specific filtering processing performed by a transceiver in a frequency domain, and a specific windowing processing performed by the transceiver in a time domain.

A slot may be constituted by one or a plurality of symbols in the time domain (orthogonal frequency division multiplexing (OFDM) symbols, single carrier frequency division multiple access (SC-FDMA) symbols, and the like). Also, a slot may be a time unit based on numerology.

A slot may include a plurality of mini slots. Each mini slot may include one or a plurality of symbols in the time domain. Further, the mini slot may be referred to as a "subslot". Each mini slot may include fewer symbols than a slot. PDSCH (or PUSCH) transmitted in a time unit larger than a mini slot may be referred to as PDSCH (PUSCH) mapping type A. A PDSCH (or PUSCH) transmitted using a mini slot may be referred to as PDSCH (PUSCH) mapping type B.

A radio frame, a subframe, a slot, a mini slot, and a symbol all represent the time unit in signal communication. The radio frame, the subframe, the slot, the mini slot, and the symbol may be called by other applicable names, respectively. Note that time units such as a frame, a subframe, a slot, a mini slot, and a symbol in the present disclosure may be replaced with each other.

For example, one subframe may be referred to as TTI, a plurality of contiguous subframes may be referred to as TTI, or one slot or one mini slot may be referred to as TTI. That is, at least one of the subframe and TTI may be a subframe (1 ms) in the existing LTE, may be a period shorter than 1 ms (e.g., one to thirteen symbols), or may be a period longer than 1 ms. Note that the unit to represent the TTI may be referred to as a "slot," a "mini slot" and so on, instead of a "subframe."

Here, a TTI refers to the minimum time unit of scheduling in radio communication, for example. For example, in the LTE system, a base station performs scheduling to allocate radio resources (a frequency bandwidth and transmission power that can be used in each user terminal and the like) to each user terminal in TTI units. Note that the definition of TTIs is not limited to this.

The TTI may be the transmission time unit of channel-encoded data packets (transport blocks), code blocks, codewords, or the like, or may be the unit of processing in scheduling, link adaptation, or the like. Note that, when the TTI is given, a time interval (for example, the number of symbols) to which the transport block, code block, codeword, or the like is actually mapped may be shorter than the TTI.

Note that, when one slot or one mini slot is referred to as a "TTI," one or more TTIs (that is, one or more slots or one or more mini slots) may be the minimum time unit of scheduling. Also, the number of slots (the number of mini slots) to constitute this minimum time unit of scheduling may be controlled.

A TTI having a time length of 1 ms may be referred to as a usual TTI (TTI in 3GPP Rel. 8 to 12), a normal TTI, a long TTI, a usual subframe, a normal subframe, a long subframe, a slot, and the like. A TTI that is shorter than the usual TTI may be referred to as a shortened TTI, a short TTI, a partial TTI (or fractional TTI), a shortened subframe, a short subframe, a mini slot, a subslot, a slot, and the like.

Note that a long TTI (for example, a usual TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or a plurality of contiguous subcarriers in the frequency domain. The number of subcarriers included in the RB may be the same regardless of the numerology, and may be twelve, for example. The number of subcarriers included in the RB may be determined based on the numerology.

Also, an RB may include one or more symbols in the time domain, and may be one slot, one mini slot, one subframe or one TTI in length. One TTI, one subframe, and the like each may be constituted by one or a plurality of resource blocks.

Note that one or a plurality of RBs may be referred to as a physical resource block (PRB (Physical RB)), a subcarrier group (SCG (Sub-Carrier Group)), a resource element group (REG), a PRB pair, an RB pair, or the like.

Furthermore, a resource block may be constituted by one or a plurality of resource elements (REs). For example, one RE may be a radio resource field of one subcarrier and one symbol.

A bandwidth part (BWP) (which may be referred to as a partial bandwidth or the like) may represent a subset of contiguous common resource blocks (RBs) for a certain numerology in a certain carrier. Here, the common RB may be specified by the index of the RB based on a common reference point of the carrier. The PRB may be defined in a certain BWP and be numbered within the BWP.

The BWP may include BWP for UL (UL BWP) and BWP for DL (DL BWP). For the UE, one or a plurality of BWPs may be configured within one carrier.

At least one of the configured BWPs may be active, and it may not be assumed that the UE transmits and receives a given signal/channel outside the active BWP. Note that a "cell", a "carrier", or the like in the present disclosure may be replaced with the "BWP".

Note that the structures of radio frames, subframes, slots, mini slots, symbols and so on described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol duration, the length of cyclic prefix (CP), and the like can be variously changed.

Further, the information, parameters, and the like described in the present disclosure may be represented using absolute values or relative values with respect to given values, or may be represented using other corresponding information. For example, a radio resource may be specified by a given index.

The names used for parameters and the like in the present disclosure are in no respect limiting. Furthermore, any mathematical expression or the like that uses these parameters may differ from those explicitly disclosed in the present disclosure. Since various channels (PUCCH, PDCCH, and the like) and information elements can be identified by any suitable names, various names assigned to these various channels and information elements are not restrictive names in any respect.

The information, signals, and the like described in the present disclosure may be represented by using any of a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Further, information, signals, and the like can be output in at least one of a direction from higher layers to lower layers and a direction from lower layers to higher layers. Information, signals and so on may be input and output via a plurality of network nodes.

The information, signals and so on that are input and/or output may be stored in a specific location (for example, in a memory), or may be managed in a control table. The information, signal, and the like to be input and/or output can be overwritten, updated or appended. The output information, signal, and the like may be deleted. The information, signals and so on that are input may be transmitted to other pieces of apparatus.

Notification of information may be performed not only by using the aspects/embodiments described in the present disclosure but also using another method. For example, notification of information in the present disclosure may be performed by using physical layer signaling (for example, downlink control information (DCI), uplink control information (UCI)), higher layer signaling (for example, radio resource control (RRC) signaling, broadcast information (master information block (MIB), system information block (SIB), or the like), medium access control (MAC) signaling), another signal, or a combination thereof.

Note that physical layer signaling may be referred to as Layer 1/Layer 2 (L1/L2) control information (L1/L2 control signals), L1 control information (L1 control signal), or the like. Further, the RRC signaling may be referred to as an RRC message, and may be, for example, an RRC connection setup message, an RRC connection reconfiguration message, and the like. Further, a notification of MAC signaling may be given using, for example, MAC control elements (MAC control elements (CEs)).

Also, reporting of given information (for example, reporting of information to the effect that "X holds") does not necessarily have to be sent explicitly, and can be sent implicitly (for example, by not reporting this piece of information, by reporting another piece of information, and so on).

Decisions may be made in values represented by one bit (0 or 1), may be made in Boolean values that represent true or false, or may be made by comparing numerical values (for example, comparison against a given value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server, or another remote source by using at least one of a wired technology (coaxial cable, optical fiber cable, twisted pair, digital subscriber line (DSL), or the like) and a wireless technology (infrared rays, microwaves, and the like), at least one of the wired technology and the wireless technology is included within the definition of a transmission medium.

The terms "system" and "network" used in the present disclosure can be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be interchangeably used.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or a plurality of (for example, three) cells. When a base station accommodates a plurality of cells, the entire coverage area of the base station can be partitioned into a plurality of smaller areas, and each smaller area can provide communication service through base station subsystems (e.g., indoor small base stations (remote radio heads (RRHs))). The term "cell" or "sector" refers to a part or the whole of a coverage area of at least one of a base station and a base station subsystem that perform a communication service in this coverage.

In the present disclosure, the terms such as "mobile station (MS)", "user terminal (user terminal)", "user equipment (UE)", and "terminal" can be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other appropriate terms.

At least one of the base station and the mobile station may be referred to as a transmission apparatus, a reception apparatus, a radio communication apparatus, and the like. Note that at least one of the base station and the mobile station may be a device mounted on a moving body, a moving body itself, and the like. The moving body may be a transportation (for example, a car, an airplane and the like), an unmanned moving body (for example, a drone, an autonomous car, and the like), or a (manned or unmanned) robot. Note that at least one of the base station and the mobile station also includes a device that does not necessarily move during a communication operation. For example, at least one of the base station and the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals(which may be referred to as, for example, device-to-device (D2D), vehicle-to-everything (V2X), and the like). In the case, the user terminal 20 may have the function of the above-mentioned base station 10. In addition, terms such as "uplink" and "downlink" may be replaced with terms corresponding to communication between terminals (for example, "side"). For example, the uplink channel, the downlink channel, and the like may be replaced with a side channel.

Similarly, the user terminal in the present disclosure may be replaced with a base station. In this case, the base station 10 may be configured to have the above-described functions of the user terminal 20.

In the present disclosure, the operation performed by the base station may be performed by an upper node thereof in some cases. In a network including one or a plurality of network nodes with base stations, it is clear that various operations performed for communication with a terminal can be performed by a base station, one or a plurality of network nodes (examples of which include but are not limited to mobility management entity (MME) and serving-gateway (S-GW)) other than the base station), or a combination thereof.

Each aspect/embodiment described in the present disclosure may be used alone, used in combination, or switched in association with execution. Further, the order of processing procedures, sequences, flowcharts, and the like of the aspects/embodiments described in the present disclosure may be re-ordered as long as there is no inconsistency. For example, regarding the methods described in the present disclosure, elements of various steps are presented using an illustrative order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded based on these, and the like. Further, a plurality of systems may be combined (for example, a combination of LTE or LTE-A and 5G) and applied.

The phrase "on the basis of" as used in the present disclosure does not mean "on the basis of only", unless otherwise specified. In other words, the phrase "based on" means both "based only on" and "based at least on."

Any reference to an element using designations such as "first" and "second" used in the present disclosure does not generally limit the amount or order of these elements. These designations may be used in the present disclosure only for convenience, as a method for distinguishing between two or more elements. In this way, reference to the first and second elements does not imply that only two elements may be employed, or that the first element must precede the second element in some way.

The term "determining" used in the present disclosure may include a wide variety of operations. For example, "determining" may be regarded as "determining" of judging, calculating, computing, processing, deriving, investigating, looking up, search, inquiry (for example, looking up in a table, database, or another data structure), ascertaining, and the like.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on.

In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

Further, "determining" may be replaced with "assuming", "expecting", "considering", and the like.

As used in the present disclosure, the terms "connected" and "coupled", or any variation of these terms mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be replaced with "access".

As used in the present disclosure, when two elements are connected, these elements may be considered "connected" or "coupled" to each other by using one or more electrical wires, cables, printed electrical connections, and the like, and, as a number of non-limiting and non-inclusive examples, by using electromagnetic energy having wavelengths in the radio frequency, microwave, and optical (both visible and invisible) regions, or the like.

In the present disclosure, the phrase "A and B are different" may mean "A and B are different from each other". Note that the phrase may mean that "A and B are different from C". The terms such as "leave", "coupled", and the like may be interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, for example, when translations add articles, such as a, an, and the in English, the present disclosure may include that the noun that follows these articles is in the plural.

Now, although the invention according to the present disclosure has been described in detail above, it is obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined on the basis of the description of claims. Consequently, the description of the present disclosure is provided for the purpose of exemplification and explanation, and has no limitative meaning to the invention according to the present disclosure.

This application is based on Japanese Patent Application No. 2019-084681 filed on April 9, 2019. The contents of this are all incorporated herein.

## Claims

1. A user terminal comprising:
a receiving section that receives a medium access control (MAC) control element for activating spatial relation information (SRI) related to a sounding reference signal (SRS) resource set; and
a control section that applies the SRI activated by the MAC control element to given uplink transmission.

2. The user terminal according to claim 1, wherein, when the MAC control element includes a field of an identifier of the SRS resource set, the control section applies the SRI activated by the MAC control element regardless of an SRS resource designated by downlink control information for the given uplink transmission.

3. The user terminal according to claim 1 or 2, wherein, when the MAC control element includes the field of the identifier of an SRS resource, the control section applies the SRI activated by the MAC control element based on an SRS resource designated by the downlink control information for the given uplink transmission.

4. A radio communication method of a user terminal, the method comprising steps of:
receiving a medium access control (MAC) control element for activating spatial relation information (SRI) on a sounding reference signal (SRS) resource set; and
applying the SRI activated by the MAC control element to given uplink transmission.
